# EUROPEAN PATENT SPECIFICATION

(11) **EP 0 702 596 B1**
(45) Date of publication and mention of the grant of the patent: **18.12.1996**
(21) Application number: 94917116.9
(22) Date of filing: 09.06.1994
(51) Int. Cl.: B01J 21/16

(54) **CATALYTIC MATERIALS COMPRISING LAYERED CLAY MACROSPHERES**
KATALYTISCHE MATERIALIEN, DIE MAKROKUGELN AUS GESCHICHTETER TONERDE ENTHALTEN
MATERIAUX CATALYTIQUES A MACROSPHERES D'ARGILE EN COUCHES

(30) Priority: 10.06.1993 GB 9311967
(43) Date of publication of application: 27.03.1996
(73) Proprietor: Laporte Industries Limited, London WC1B 3RA (GB)
(72) Inventor: BUCK, Malcolm, Johnstone, Widnes WA8 0DX (GB); FOWLES, Edmund Hartley, Liverpool L8 3SX (GB)
(74) Representative: Green, Mark Charles
(86) International application number: GB9401244
(87) International publication number: WO9429020

(56) References cited:
- EP-A- 0 253 511
- DE-A- 2 851 952
- DE-A- 3 524 160
- US-A- 4 142 994

## Description

This invention relates to a new or improved catalytic material comprising layered clay macrospheres having a particular combination of physical characteristics and to a method for preparing the same. The use of the new or improved catalytic material to catalyse organic reactions or transformations is also provided as a further and separate aspect of this invention.

Layered clay minerals have been proposed for use as supports for catalytically active metals. Such proposals usually involve the preparation of a shaped clay body, the impregnation of the shaped body with a solution of a salt of a catalytically active metal and the conversion of the salt into the catalytically active form by heating under suitable conditions. Such processes usually involve the calcination of the clay body before impregnation with the metal salt solution. Typical of disclosures of such proposals are a series of patents in the name of UOP Inc. which relate to metal based catalysts, or to processes for using them, in which the catalyst is supported on a refractory porous support which may be of clay but which is, preferably, alumina in the form of spheres having diameters of about 1500 microns. Examples of such disclosures are found in the following United States Patents:USP 4 923 595, 4 865 719, 4 737 483, 4 714 540, 4 714 539, 4 677 094 and 4 714 538.

There have also been proposals to produce catalysts directly from the layered clay mineral kaolin by spray drying an alkaline slurry of the kaolin and calcining at a temperature sufficiently high to degrade the clay structure and to form faujasite, mullite or spinel type structures. The resulting products have catalytic activity for a variety of uses. Examples of disclosures of such proposals are United States Patents No 4 628 042 and European Patent Specifications No 122 572 and 325 487.

There has also been a proposal to use a clay in spherical form as a fluidisation aid for a cotalytic contact material. United States Patent No 5 075 477 discloses the use of a copper or cuprous chloride based catalyst in the production of trisilaalkanes. The reaction may be carried out in a fluidised bed of a contact material made up of silicon metal and copper catalyst. A fluidisation aid consisting of a micro-spherical or spherical fine powder-type acid clay may be added to the contact mixture in 5% - 10% based on the amount of silicon. The clay in question is not further described but is thought to be a hydrogen form natural clay which, to form microspheres, is spray dried as a suspension. No function other than that stated above is postulated for the acid clay.

The present invention provides a catalytic material comprising macrospheres consisting essentially of an acid-leached calcined layered clay mineral having a surface area of at least 100 m²/g and an average pore diameter of at least 20 Angstroms the macrospheres having a bulk density not above 1.0 g/cc.

The term "macrosphere" is used herein to denote a spherical body having a diameter of at least 0.25 mm, preferably at least 0.5 mm, and possibly up to 2.5 mm or above. Some variation from the precise spherical shape may be contemplated but it is preferred that at least 75% wt of the composition, particularly preferably at least 90% wt thereof, consists of particles which individually have diameters not varying by more than about 25%, particularly by by more than about 10%. In a bulk of such macrospheres it is preferred that at least 75% wt, particularly at least 90% have the dimensions above described. The term "surface area" as used herein refers to the nitrogen surface area measured on a Micromeritics ASAP 2400 instrument with degassing at 280°C prior to analysis and using a five point BET analysis. The term "average pore diameter" refers to that measured using the same instrument using the desorption branch of the nitrogen isotherm from P/Po (relative pressure) of around 1 to 0.05. Pore diameter was calculated using Micromeritics software and the BJH method and was averaged over the full pressure range.

While the catalytic material of the present invention may, at the option of the user, be applied in conjunction with one or more other catalysts, such as metallic catalysts, it is an essential feature of the invention that, when used by itself, it provides catalytic activity. Preferably the said catalytic material is used as the only catalytic material in any particular application.

It is a feature of the invention that this catalytic material is suitable for regeneration, eg by thermal treatment, hydrothermal treatment, inert gas flow, solvent washing or acid washing without undue losses and in use offers a predictable flow pattern and a reduced pressure drop.

The layered clay mineral which is the basis of the composition of the present invention may be a naturally occurring mineral or a synthetic analogue thereof. It may be a two layered mineral such as a kaolinite, or a ribboned clay mineral containing a layered structure such as attapulgite or sepiolite but is preferably a three layer clay mineral such as a smectite. Amongst the smectites the montmorillonites or the beidellites, very suitably the calcium/magnesium forms, are particularly preferred although the saponites, sauconites or hectorites also come into particular consideration. It is understood that the invention as herein described may be applied to various suitable layered clay minerals, with appropriate modifications in view of the nature of the particular clay mineral if required.

In order to attain the desired clay mineral porosity and surface area in the macrospheres the clay mineral is preferably acid-leached with a strong acid, for example one having a pKa value below 3.0, such as sulphuric, nitric or hydrochloric acid or suitable organic acids. Acid leaching has the effect of leaching out aluminium from aluminosiliceous minerals such as the montmorillonites to generate pores having diameters larger than the original basal spacing of the mineral. The pores so generated may have diameters of 15 Angstroms upwards although, in the present invention the leaching is preferably controlled to achieve a substantial proportion of pores in the 20 to 100 Angstrom range with an average pore diameter , which is preferably also seen in the final catalyst, of at least 20 but particularly preferably at least 30 Angstroms. Very suitably the average pore diameter is from 35 to 80 Angstroms. Another characteristic feature of the invention which may be achieved by acid leaching is surface area. The initial surface area of the clay mineral will usually be very low, for example below 80 m²/g . The acid leaching is controlled to achieve at least the minimum of 100 m²/g which is required by the present invention. Preferably, however, the process is controlled to achieve a surface area of at least 150 m²/g, for example, very suitably, at least 200 m²/g and preferably up to 500 m²/g in the final macrospheres.

The pore volume of the macrospheres, which also relates to the amount of acid leaching of the clay mineral, is preferably at least 0.2, particularly preferably at least 0.3, for example, very suitably, at least 0.36 cm³ and up to 0.8 cm³/g (N₂, P/Po approx 0.98).

As a preparation for acid leaching the raw clay mineral may be blunged, sieved and milled if necessary to a particle size below about 100 microns. The acid leaching may be controlled by varying the duration, temperature, pressure acid concentration or acid:clay ratio used. The acid concentration may be, for example, 77% to 100% wt with a concentration in the aqueous clay slurry of, for example, 15% to 30% wt. The acid:clay ratio may suitably be from 0.25 to 1.5, calculated as 100% acid by weight. The duration of leaching may suitably be from 1 to 24 hours at atmospheric pressure or 1 to 8 hours if elevated pressure is used. Such elevated pressure may suitably be up to 200 psig (13.5 bars) preferably achieved by temperature control in a closed vessel. At atmospheric pressure a temperature of 70° to 100°C may suitably be used.

It is a further effect of acid leaching that the removal of aluminium from the clay mineral exposes acidic sites. This surface acidity, which is preferably at least 0.3, suitably up to 1.5, m mole H⁺/g measured by the ammonia adsorption process of Rhodes and Brown, is highly pertinent to the eventual catalytic activity of the present product. It is preferred to control the acid leaching conditions to achieve this feature in the product of the present invention.

The acid leaching of the layered clay mineral results in the formation of soluble salts of aluminium and other constituents of the clay mineral, particularly of the octahedral layer thereof, such as magnesium or iron. The aluminium content of the washed acid leached mineral is preferably no more than 15% as Al₂O₃, representing aluminium remaining bound in the clay structure. The soluble salts are preferably washed out to a suitably low free acidity but, particularly preferably, free acidity is not completely removed, that is, it is detectable and is, for example at least 0.1%. Preferably the free acidity (sample boiled in deionised water, filtered, titrated against NaOH and expressed as wt% of H₂SO₄) of the catalytic material is up to 3.0%, very suitably up to 2.0%. The pH of a 2% suspension of the catalytic material is preferably from 3 to 5.

The acid leached, washed clay mineral is shaped, preferably by balling, to form macrospheres. The acid-leached clay mineral has preferably first been dried to a water content of below 20% wt, particularly preferably below 12% wt and preferably not below 2% wt, particularly preferably not below 5% wt. A small extra quantity of water may be added to a charge of clay in a balling pan and it is found that, particularly when the clay mineral is a montmorillonite, spheres of a high degree of conformity may be produced. Additives known 'per se' as binders and nuclei may be added and may preferably be present in from 5% to 20% based on the dry weight of the clay. Balling, in contrast to compaction or extrusion techniques offers the advantage of a low decrease in accessible pore volume on forming although other techniques are not excluded from the ambit of the invention. Balling also offers an intermediate but not unduly low bulk density material, for example, preferably 0.4 to 0.8 g/cm³, which enables economies to be achieved in material usage without handling problems associated with the lowest bulk density materials. The formed clay mineral is dried and then calcined. The product of the present invention still possesses sufficient characteristics of the original clay structure to enable the clay used to be identified by those skilled in this art. Any calcination of the clay mineral, in the course of its processing according to the invention, is controlled so as to achieve this. In the case of many smectite clay minerals such as montmorillonite, for example, heating eventually causes degradation of the smectite structure beginning, initially, at temperatures in the region of from about 715°C to about 800°C with the progressive loss of structural water followed by phase changes. In view of this any calcination, while it may be at a temperature up to 800°C subject to sufficient structural retention, is preferably at not above 750°C, particularly preferably at not above 715°C. Reference to a material consisting of or comprising a layered clay mineral hereafter indicates the presence in that material of the original clay mineral structure, or at least sufficient thereof to enable identification. It is understood that while the product of the invention is in the calcined form the uncalcined, partially calcined or dried precursors thereof are also considered to be within the ambit of the invention. It is envisaged that the macrospheres provided herein may also have non-catalytic uses by virtue of their surface area and pore structure and the suitability of the relatively low bulk density spherical form for use in solid-liquid contact processes. Use as an adsorbent for the purification of liquids, such as aqueous industrial effluents, is envisaged.

It is found that the macrospheres obtained as described above may be size-controlled by the operation of the balling process to enable the desired size distribution to be obtained without undue screening, often without screening out more than 25% wt or even more than 10-15% wt. The preferred product diameter will vary according to the users requirements. The material obtained by the above described process also shows the properties of (a)high attrition resistance, for example giving an attrition breakdown of no greater than 1% after attrition in a baffled drum rotating at 40 rpm for 1 hour, (b) high bulk crush strength, for example giving a % breakdown of no more than 3% after being subjected to a weight of 750 kg for 2 minutes in die and piston testing apparatus and (c) low breakdown in heated water, for example no more than 0.9% after treatment with boiling water for 10 minutes. These tests demonstrate that the macrospheres have considerable durability in use, for example in continuous processes.

The catalytic material may be applied to a variety of organic conversions including:
(a) Bromine Index Reduction, that is the removal of olefins from benzene, toluene, xylene and other aromatic streams, for example in general reformate streams, in xylene heart cut streams with minimal formation of transalkylates and in cumene streams
(b) Alkylation of phenols with olefins such as the dodecenes or the nonenes or the alkylation of xylenols with olefins
(c) Alkylation of benzene with olefins such as the C₁₀ to C₁₆ straight chain olefins to give linear alkylbenzenes (LABs) or with propylene to give cumene
(d) Etherification of alcohols with olefins such as the raection between methanol and isobutene to give methyl tertiarybutyl ether (MBTE) or between methanol and 2-methyl-2-butene to give tertiaryamyl methyl ether (TAME)

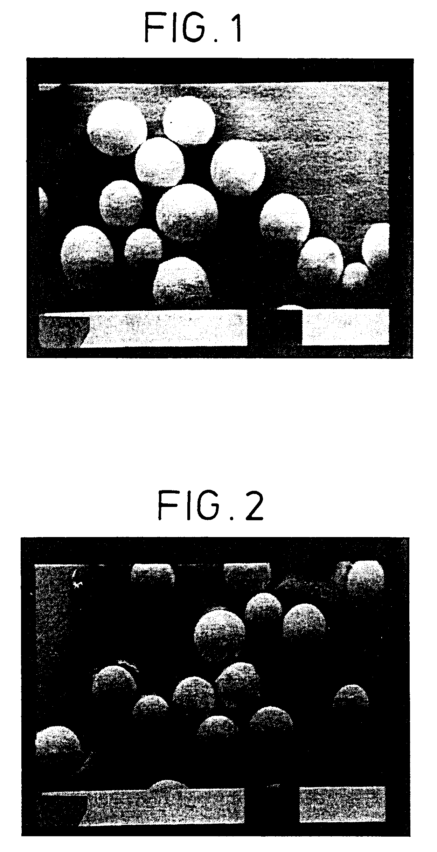

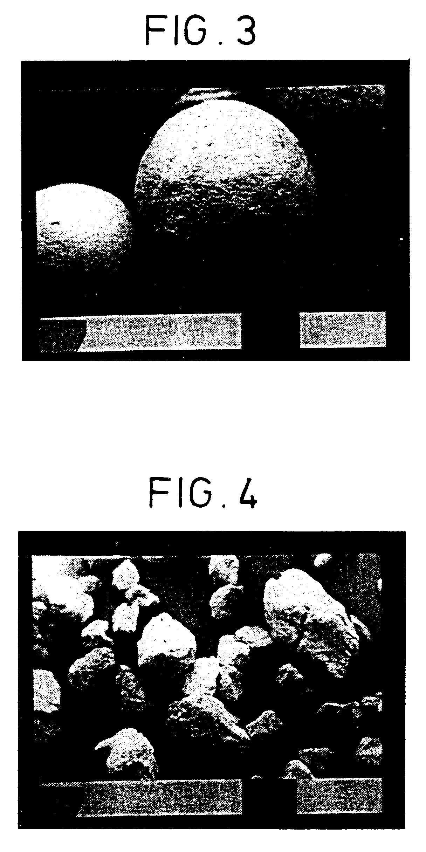

Aspects of the invention will now be illustrated by means of the following Examples which are not intended to limit the scope of the invention as described herein. Example 1 and embodiments A, B and C of Examples 2 to 5 are according to the invention whereas embodiments using competitive materials are comparative therewith. Figures 1 to 3 attached hereto are Scanning Electron Micrographs of products of the invention and in the case of Figure 4 of a competitive product. Competitive products 1 to 3 are granular materials derived from montmorilonite, sold for catalytic applications, and were found to have the following physical properties.

| | Comp1 | Comp2 | Comp3 |
|---|---|---|---|
| Nitrogen surface area m²/g | 241 | 385 | 107 |
| Nitrogen pore volume cm³/g | 0.371 | 0.365 | 0.138 |
| Nitrogen av. pore diam A | 57 | 39 | 53 |
| Hg intrusion volume cm³/g | 0.34 | 0.26 | 0.2 |
| Bulk density g/cm³ | 0.58 | 0.81 | 0.86 |
| H₂O breakdown* % | 13 | 2 | 100 |
| Crush strength* % | 21 | 5 | 4 |
| Attrition breakdown* % | 9 | 2 | 2 |
| pH 2% suspension | 3.7 | 3.3 | 8.6 |
| Free acidity % | 0.1 | 0.9 | 0.1 |
| Loss on drying % | 4 | 16 | 3 |
| Loss on ignition # % | 5.7 | 9.5 | 7.7 |
| SiO₂# % | 74.3 | 72.2 | 59.4 |
| Al₂O₃# % | 11.6 | 8.8 | 15.7 |
| Fe₂O₃# % | 2.2 | 4 | 5.8 |

| | | | |
|---|---|---|---|
| * The lower the number the more resistant the material. | | | |
| # Dry weight basis. | | | |

### Example 1. Production of macrospheres.

Three samples of the product of the invention were produced by the following process. Calcium/magnesium montmorillonite was blunged, sieved, dried and milled and was treated with a strong mineral acid to leach out aluminium values. The acid-leached product was filtered, washed and dried. The following were typical characteristics of the dried product:

| | |
|---|---|
| N₂ surface area | 286 m2/g |
| N₂ pore volume | 0.542 cm³/g |
| Pore diam. (av.) | 64 Angstroms |
| Particle size | D₁₀ 4.3 microns |
| | D₅₀ 21.0 microns |
| | D₉₀ 87.2 microns |
| Free Acidity | 0.8% |
| pH (2% susp.) | 3.1 |
| Loss on drying(as recd.) | 8.8% |
| Loss on ignition* | 10.1% |
| SiO₂ wt* | 70.0% |
| Al₂0₃ wt* | 10.1% |
| Fe₂0₃ wt* | 2.2% |

| | |
|---|---|
| (* = dry basis) | |

Dried product was fed to a 2m balling pan rotating at 16 rpm, with a little water and to form spheres. The spheres were dried in a static oven and calcined. The size range of the spherical catalyst product was 0.2 to 1.2mm with 90% wt. of the material in the range 0.5 to 1.0mm.

The calcined spheres of catalytic materials had the following properties:

| | A | B | C |
|---|---|---|---|
| Nitrogen surface area m²/g | 299 | 286 | 250 |
| Nitrogen pore volume cm³/g | 0.434 | 0.438 | 0.448 |
| Nitrogen av. pore diam A | 51 | 51 | 57 |
| Hg intrusion volume cm³/g | 0.37 | 0.40 | 0.43 |
| Bulk density g/cm³ | 0.67 | 0.64 | 0.66 |
| H₂O breakdown* % | 0.9 | 0.1 | 0.1 |
| Crush strength* % | 3 | 3 | 3 |
| Attrition breakdown* % | 1 | 0.5 | 0.5 |
| pH 2% suspension | 4.3 | 4.0 | 4.6 |
| Free acidity % | 0.5 | 1.0 | 0.1 |
| Surface acidity % | >0.3 | >0.3 | >0.3 |
| Loss on drying % | | <0.1 | |
| Loss on ignition # % | | 1.6 | |
| SiO₂# % | | 76.6 | |
| Al₂O₃# % | | 11.2 | |
| Fe₂O₃# % | | 2.8 | |

| | | | |
|---|---|---|---|
| * The lower the number the more resistant the material. | | | |
| # Dry weight basis. | | | |

The particularly low water breakdown shown by the above products is an important practical advantage of the invention.

There are attached hereto Figures 1 to 4 which are Scanning Electron Micrographs of the products designated A,B and C and Comp 1 (Figure 4) above. The spherical regularity shown by A, B and C gives particularly advantageous fluid flow properties in use.
- Figure 1: Product A 0.5-1 mm fraction magnification x 20
- Figure 2: Product C 0.5-1 mm fraction magnification x 20
- Figure 3: Product C 1.0-1.4 mm fraction magnification x 50
- Figure 4: Comp.1 - magnification x 20

### Catalytic Reduction of Bromine Index in Reformate Feedstock.

Products A, B and Competitors 1 and 2 were used to catalyse the reduction of the Bromine Index of a reformate feedstock having an initial Index of 810. The catalyst volume was 25 cm³, the space velocity was 2h⁻¹ and the time temperature relationship was 17 hours at 150°C, 3 hours at 175°C.

The final Bromine Index was:

| | |
|---|---|
| Product B | 17 |
| Product B | 41 |
| Comp. 1 | 9 |
| Comp. 2 | 12 |

### Example 3

### Catalytic Reduction of Bromine Index with minimal formation of transalkylates ion xylene heart cut feedstock.

Products B and Competitor 3 were used to catalyse the treatment of xylene heart cut feedstock having a Bromine Index of 160 and containing no transalkylates. The catalyst volume was 25 cm³, the space velocity was 2h⁻¹ and the time/temperature was 17 hours at 200°C, 3 hours at 225°C. The results were as follows:

| Product | Br.Index | Transalkylates (ppm) |
|---|---|---|
| B | 12 | 5400 |
| B | 10 | 2300 |
| Competitor 3 | 14 | 8500 |

### Example 4 Alkylation of phenol with 1-nonene.

Products A, B, C and Competitor 2 were used to catalyse this reaction using a phenol:nonene mole ratio of 2:1, a catalyst loading of 4% wt. and a duration of 2 hours at 130°C . The results were as follows:

| Product | Phenol conversion% | Yield monoalkyl% (based on nonene) |
|---|---|---|
| A | 40 | 69 |
| B | 38 | 49 |
| C | 24 | 21 |
| Competitor | 43 | 76 |

### Example 5 Alkylation of phenol with 1-dodecene.

Product A was tested in this reaction. The temperature was 130°C, the reaction duration was 2 hours, the phenol:dodecene mole ratio was 2:1 and the catalyst loading was 3.5%. The results were that the conversion of phenol was 38% and the yield of monoalkyl was 60% based on dodecene.

## Claims

1. A catalytic material comprising macrospheres being spherical bodies having a diameter of at least 0.25mm and consisting essentially of an acid-leached calcined layered clay mineral having a surface area of at least 100 m²/g and an average pore diameter of at least 20 Angstroms, the macrospheres having a bulk density not above 1.0 g/cc.

2. A catalytic material as claimed in claim 1 wherein the calcined layered clay mineral has a surface area of at least 200 m²/g and an average pore diameter of at least 30 Angstroms.

3. A catalytic material as claimed in claim 1 or claim 2 wherein the calcined layered clay mineral has a surface acidity of at least 0.3 mmole H⁺/g.

4. A catalytic material as claimed in any preceding claim having a free acidity of at least 0.1%.

5. A process for the production of a catalytic material as claimed in any one of claims 1 to 5 comprising acid-leaching a layered clay mineral to give a surface area of at least 100 m²/g and an average pore diameter of at least 20 Angstroms, washing the acid-leached material to reduce the free acidity therein, balling the washed acid-leached clay mineral to form macrospheres having a bulk density not above 1.0 g/cc and calcining the macrospheres as appropriate.

6. A process as claimed in claim 6 wherein the acid-leaching is conducted until the surface acidity of the layered clay mineral is at least 0.3 mmole H⁺/g.

7. A process as claimed in claim 6 or claim 7 wherein the calcination is conducted at a temperature of up to 800°C subject to control to retain sufficient clay structure to enable the calcined clay mineral to be identified.

8. A process as claimed in claim 8 wherein the calcination is conducted at a temperature not above 750°C.

9. The use of a catalytic material as claimed in any one of claims 1 to 4 to catalyse organic reactions or transformations.

10. The use claimed in claim 10 wherein the organic reactions or transformations are selected from bromine index reductions, alkylations of phenols, alkylations of benzene and esterifications of alcohols.

11. Macrospheres as defined in Claim 1, suitable for catalytic use having a bulk density not above 1.0 g/cc and comprising an acid-leached calcined layered clay mineral having a surface area of at least 100 m²/g and an average pore diameter of at least 20 Angstroms.

## Patentansprüche

1. Katalytisches Material umfassend Makrokugeln, die kugelförmige Körper mit einem Durchmesser von wenigstens 0,25 mm sind und im wesentlichen aus einem mit Säure ausgelaugten, kalzinierten, geschichteten Tonmineral mit einer Oberfläche von wenigstens 100 m²/g und einem durchschnittlichen Porendurchmesser von wenigstens 20 Angström bestehen, wobei die Makrokugeln eine Schüttdichte von nicht mehr als 1,0 g/ccm haben.

2. Katalytisches Material nach Anspruch 1, wobei das kalzinierte, geschichtete Tonmineral eine Oberfläche von wenigstens 200 m²/g und einen durchschnittlichen Porendurchmesser von wenigstens 30 Angström hat.

3. Katalytisches Material nach Anspruch 1 oder 2, wobei das kalzinierte, geschichtete Tonmineral eine Oberflächenazidität von wenigstens 0,3 mmol H⁺/g hat.

4. Katalytisches Material nach einem der vorhergehenden Ansprüche mit einer freien Azidität von wenigstens 0,1%.

5. Verfahren zur Herstellung eines katalytischen Materials nach einem der Ansprüche 1 bis 5, umfassend das Säureauslaugen eines geschichteten Tonminerals, um eine Oberfläche von wenigstens 100 m²/g und einem durchschnittlichen Porendurchmesser von wenigstens 20 Angström zu erzeugen, das Waschen des mit Säure ausgelaugten Materials, um die freie Azidität darin zu verringern, das Zusammenballen des gewaschenen, mit Säure ausgelaugten Tonminerals, um Makrokugeln mit einer Schüttdichte von nicht mehr 1,0 g/ccm zu bilden, und die Kalzinierung der Makrokugeln in geeigneter Weise.

6. Verfahren nach Anspruch 6, worin das Auslaugen mit Säure durchgeführt wird, bis die Oberflächenazidität des geschichteten Tonminerals wenigstens 0,3 mmol H⁺/g beträgt.

7. Verfahren nach einem der Ansprüche 6 oder 7, worin die Kalzinierung bei einer Temperatur von bis zu 800°C durchgeführt wird, wobei sie so gesteuert wird, daß hinreichend Tonstruktur zurückgehalten wird, um die Identifizierung des kalzinierten Tonminerals zu ermöglichen.

8. Verfahren nach Anspruch 8, worin die Kalzinierung bei einer Temperatur von nicht über 750°C durchgeführt wird.

9. Verwendung eines katalytischen Materials nach einem der Ansprüche 1 bis 4 zur Katalyse von organischen Reaktionen oder Umwandlungen.

10. Verwendung nach Anspruch 10, worin die organischen Reaktionen oder Umwandlungen ausgewählt sind aus Bromzahlreduktionen, Alkylierungen von Phenolen, Alkylierungen von Benzol und Veresterung von Alkoholen.

11. Makrokugeln gemäß Anspruch 1, die zur katalytischen Verwendung geeignet sind, mit einer Schüttdichte von nicht mehr als 1,0 g/ccm und umfassend ein mit Säure ausgelaugtes, kalziniertes, geschichtetes Tonmineral mit einer Oberfläche von wenigstens 100 m²/g und einem durchschnittlichen Porendurchmesser von wenigstens 20 Angström.

## Revendications

1. Matériau catalytique comprenant des macrosphères étant des corps sphériques ayant un diamètre d'au moins 0,25 mm et consistant essentiellement en un minéral contenant du silicate hydraté d'aluminium en couches, calciné, lessivé par les acides, ayant une zone de surface d'au moins 100 m²/g et un diamètre moyen de pore d'au moins 20 Angströms, les macrosphères ayant une densité en vrac qui n'est pas au-dessus de 1,0 g/cc.

2. Matériau catalytique selon la revendication 1,
caractérisé en ce que
le minéral en couches calciné, a une zone de surface d'au moins 200 m²/g et un diamètre moyen de pore d'au moins 30 Angströms.

3. Matériau catalytique selon la revendication 1 ou la revendication 2,
caractérisé en ce que
le minéral en couches, calciné a une acidité de surface d'au moins 0,3 mmol. H⁺/g.

4. Matériau catalytique selon l'une des revendications précédentes,
ayant une acidité libre d'au moins 0,1 %.

5. Procédé pour la production d'un matériau catalytique selon l'une quelconque des revendications 1 à 4,
comprenant le lessivage, par un acide, d'un minéral contenant du silicate hydraté d'aluminium en couches, pour fournir une zone de surface d'au moins 100 m²/g et un diamètre moyen de pore d'au moins 20 Angströms, le lavage du matériau lessivé par un acide pour y réduire l'acidité libre, la mise en boule du minéral traité par l'acide, pour former des macrosphères ayant une densité en vrac qui n'est pas au-dessus de 1,0 g/cc et la calcination appropriée des macrosphères.

6. Procédé selon la revendication 5,
caractérisé en ce que
le lessivage par acide est conduit jusqu'à ce que l'acidité de surface du minéral contenant du silicate hydraté d'aluminium en couches soit d'au moins 0,3 mmol.

7. Procédé selon la revendication 5 ou la revendication 6,
caractérisé en ce que
la calcination est conduite à une température allant jusqu'à 800°C soumise à une régulation pour retenir une structure d'argile suffisante pour rendre possible que le minéral contenant du silicate hydraté d'aluminium calciné puisse être identifié.

8. Procédé selon la revendication 7,
caractérisé en ce que
la calcination est conduite à une température qui n'est pas au-dessus de 750°C.

9. Utilisation d'un matériau catalytique selon l'une des revendications 1 à 4,
pour catalyser des réactions ou des transformations organiques.

10. Utilisation selon la revendication 9,
caractérisée en ce que
les réactions ou transformations organiques sont choisies parmi les réductions de l'indice de brome, les alcoylations de phénol, les alcoylations de benzène et les estérifications d'alcools.

11. Macrosphères selon la revendication 1,
convenant pour l'utilisation catalytique, ayant une densité en vrac qui n'est pas au-dessus de 1,0/cc et qui comprend un minéral contenant du silicate hydraté d'aluminium en couches, calciné, lessivé par l'acide, ayant une zone de surface d'au moins 100 m²/g et un diamètre moyen de pore d'au moins 20 Angströms.
